# EUROPEAN PATENT APPLICATION

(11) **EP 4 397 947 A1**
(43) Date of publication of application: **10.07.2024**
(21) Application number: 24150389.5
(22) Date of filing: 04.01.2024
(51) Int. Cl.: G01C 21/34, G01C 21/36

(54) **LEVERAGING EXTERNAL DATA STREAMS TO OPTIMIZE AUTONOMOUS VEHICLE FLEET OPERATIONS**

(30) Priority: 06.01.2023 US 202363478707 P
(71) Applicant: TuSimple, Inc., San Diego, CA 92122 (US)
(72) Inventor: TAM, Joyce, Pleasanton (US)
(74) Representative: Hamer, Thomas Daniel

(57) **Abstract**

A system accesses a plurality of data streams, each providing information about an environment associated with at least a portion of a predetermined routing plan of an autonomous vehicle. The system determines that the plurality of data streams in the aggregate indicates a route-altering event. In response to determining that the plurality of data streams in the aggregate indicate the route-altering event, the system updates the predetermined routing plan of the autonomous vehicle and communicates the updated routing plan to the autonomous vehicle.

## Description

### TECHNICAL FIELD

The present disclosure relates generally to autonomous vehicles. More particularly, the present disclosure is related to leveraging external data streams to optimize autonomous vehicle fleet operations.

### BACKGROUND

One aim of autonomous vehicle technology is to provide vehicles that can safely navigate with limited or no driver assistance. The autonomous vehicle relies on its sensors to detect route-altering events. In some situations, an autonomous vehicle may encounter a route-altering event on its traveling path or the route-altering event may be up ahead on the road and out of the detection range of sensors of the autonomous vehicle.

### SUMMARY

This disclosure recognizes various problems and previously unmet needs related to autonomous vehicle navigation, and more specifically to the lack of autonomous vehicle navigation technology in scenarios where a route-altering event is encountered by an autonomous vehicle or the route-altering event is up ahead on the road and out of the detection range of sensors of the autonomous vehicle.

The disclosed system in the present disclosure improves autonomous vehicle navigation in cases where an unexpected event (e.g., a route-altering event) is detected on a traveling path of an autonomous vehicle. One approach to evaluating the road condition along the traveling path of the autonomous vehicle is to receive and evaluate a data stream (e.g., received from a data provider) that may include road condition information. The term road condition encompasses weather, traffic, and road conditions in the present disclosure. However, in some cases, the data stream may be inaccurate, irrelevant, and/or unreliable for the autonomous vehicle. For example, the data stream may include road condition information that is not local to the autonomous vehicle. Thus, the road condition information may not be useful or relevant to the autonomous vehicle. In another example, the methodology by which the data provider gathers data, interprets weather, traffic, and road conditions, and in response, produces the data stream may not be accurate. In another example, the data provider may not have reliable sensor probes (e.g., due to damage from extreme weather, impact by an object, and/or wear and tear over time). Thus, the data stream produced by the sensor probes may not be accurate and reliable. Therefore, it is important to evaluate the reliability and accuracy of data streams used to evaluate the road condition ahead of the autonomous vehicle and to determine the navigation plan and trajectory of the autonomous vehicle.

The current autonomous vehicle technology lacks the capability of evaluating the reliability and accuracy of data streams used to evaluate the road condition ahead of the autonomous vehicles, e.g., out of the detection range of sensors of the autonomous vehicle. In other words, the current autonomous vehicle technology does not provide a solution to the technical problem of inaccurate, irrelevant, and/or unreliable data streams.

Certain embodiments of the present disclosure provide unique technical solutions to technical problems of current autonomous vehicle technologies, including those problems described above to improve the autonomous vehicle navigation. More specifically, the present disclosure contemplates a system and method to leverage external data streams to optimize autonomous vehicle fleet operations and navigations.

The disclosed system is configured to evaluate and determine the reliability and accuracy of the data streams received from various data sources, and in response, determine a routing plan or update the routing plan for navigating the autonomous vehicle. Therefore, the disclosed system provides a practical application of providing a technical solution to determine a more accurate and reliable data stream to use for navigating autonomous vehicles. The disclosed system contemplates the various data sources may include weather data providers (such as national and local weather data news providers), traffic data providers (such as national and local traffic data providers), road condition data providers, law enforcement alert data providers, emergency alert data providers, among other data type providers. For example, the disclosed system may be configured to evaluate whether a data stream is accurate by implementing a data stream evaluation machine learning module. The data stream evaluation machine learning module is trained to predict the accuracy of the data stream based on a training dataset that includes historical evaluations, sample data streams each labeled with an indication of a route-altering event, and a remote operator's feedback. Thus, the disclosed system may use the training dataset to learn the associations and relationships between each sample data stream and a respective indication of the route-altering event.

By determining and relying on more accurate data streams for navigating the autonomous vehicle, the underlying operations of the autonomous vehicle are also improved. In other words, the autonomous vehicle can be navigated more precisely and with more safety confidence.

This, in turn, provides an additional practical application of improving autonomous vehicle navigation in general, and more specifically, the autonomous vehicle navigation in situations where there is a need to alter the routing plan of the autonomous vehicle in response to a route-altering event on a traveling path of the autonomous vehicle, e.g., whether or not the route-altering event is out of the detection range of sensors of the autonomous vehicle. This, in turn, provides an additional practical application of providing a safer driving experience for autonomous vehicles, other vehicles on the road, and pedestrians. In this manner, the disclosed system improves autonomous vehicle navigation technology.

Furthermore, the disclosed system reduces the computational complexity that comes with analyzing data streams and navigating the autonomous vehicle. For example, in the process of evaluating the plurality of data streams, if the disclosed system determines that a particular data stream is inaccurate, unreliable, or irrelevant for navigating the autonomous vehicle, the disclosed system may disregard the particular data stream from consideration for navigating the autonomous vehicle. In this way, a number of inaccurate, unreliable, or irrelevant data streams is significantly reduced which reduces the burden of complex analysis of such data streams. Therefore, the disclosed system provides improvements to computer systems that are tasked with analyzing the data streams and navigating the autonomous vehicle. This, in turn, reduces the processing and memory resources that would otherwise be used for analyzing such data streams.

The disclosed system also improves the processing and memory resource allocation at the computer systems that are tasked to analyze the data streams and navigate the autonomous vehicle. For example, as the inaccurate, unreliable, and irrelevant data streams are excluded from processing and therefore navigating the autonomous vehicle, the computer systems can allocate the processing and memory resources that would otherwise be used for processing the inaccurate, unreliable, and irrelevant data streams to other operations for navigating the autonomous vehicle more safely. This also leads to improving the processing and memory resource utilization at the computer systems that are tasked to analyze the data streams and navigate the autonomous vehicle. In this manner, the underling operations on the computer systems associated with the autonomous vehicles are improved, and the navigation of the autonomous vehicles becomes safer and more precise - while less processing and memory resources are used in the navigation of the autonomous vehicles.

In certain embodiments, a system comprises a memory operably coupled to a processor. The memory is configured to store a predetermined routing plan associated with an autonomous vehicle. The processor is configured to access a plurality of data streams, each data stream from among the plurality of data streams providing information about an environment associated with at least a portion of a road in the predetermined routing plan ahead of the autonomous vehicle. The processor is further configured to determine that the plurality of data streams in the aggregate indicate a route-altering event for the autonomous vehicle, where determining that the plurality of data streams in the aggregate indicate the route-altering event for the autonomous vehicle comprises extracting a first set of features from a first data stream from among the plurality of data streams, determining, based at least in part upon the first set of features, that the first data stream provides information about a first geographical location area that is local with respect to a current location of the autonomous vehicle, determining, based at least in part upon the first set of features, that the first data stream indicates the route-altering event for the autonomous vehicle, extracting a second set of features from a second data stream from among the plurality of data streams, determining, based at least in part upon the second set of features, that the second data stream provides information about a second geographical location area that is not local with respect to the current location of the autonomous vehicle, determining, based at least in part upon the second set of features, that an indication of the route-altering event is absent in the second data stream, assigning a first weight value to the first data stream, assigning a second weight value to the second data stream, wherein the first weight value is more than the second weight value in response to determining that the first data stream is local with respect to the autonomous vehicle and that the second data stream is not local with respect to the autonomous vehicle, determining a weighted sum of the first data stream and the second data stream using the first weight value and the second weight value, and determining that the weighted sum of the first data stream and the second data stream is more than a threshold percentage. The processor is further configured to update the predetermined routing plan such that the autonomous vehicle avoids the route-altering event in response to determining that the plurality of data streams in the aggregate indicate the route-altering event for the autonomous vehicle. The processor is further configured to communicate the updated routing plan to the autonomous vehicle.

Certain embodiments of this disclosure may include some, all, or none of these advantages. These advantages and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an embodiment of a system configured to leverage external data streams to optimize autonomous vehicle fleet operations and navigations;
FIG. 2 illustrates an example operational flow of the system of FIG. 1;
FIG. 3 illustrates an example flowchart of a method for leveraging external data streams to optimize autonomous vehicle fleet operations and navigations;
FIG. 4 illustrates a block diagram of an example autonomous vehicle configured to implement autonomous driving operations;
FIG. 5 illustrates an example system for providing autonomous driving operations used by the autonomous vehicle of FIG. 4; and
FIG. 6 illustrates a block diagram of an in-vehicle control computer included in the autonomous vehicle of FIG. 4.

### DETAILED DESCRIPTION

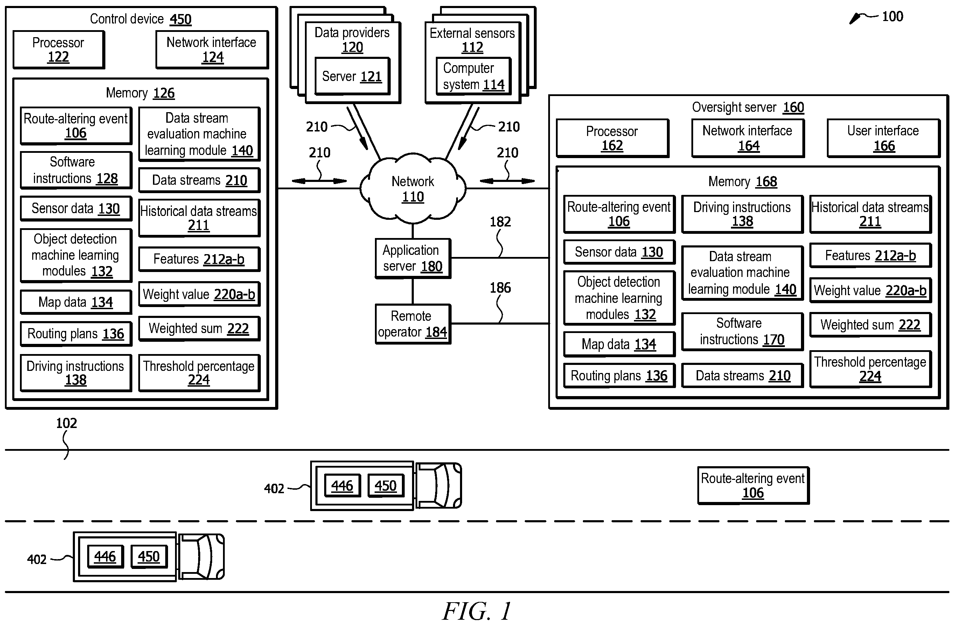

As described above, previous technologies fail to provide efficient, reliable, and safe solutions to leverage external data streams to optimize autonomous vehicle fleet operations and navigations. The present disclosure provides various systems, methods, and devices to leverage external data streams to optimize autonomous vehicle fleet operations and navigations. Embodiments of the present disclosure and its advantages may be understood by referring to FIGS. 1 through 6. FIGS. 1 through 6 are used to describe a system and method to leverage external data streams to optimize autonomous vehicle fleet operations and navigations.

### System Overview

FIG. 1 illustrates an embodiment of a system 100 configured to leverage external data streams to optimize autonomous vehicle fleet operations and navigations. FIG. 1 further illustrates a simplified schematic of a road 102 traveled by one or more autonomous vehicles 402, where the autonomous vehicle 402 encounters a route-altering event 106 or the route-altering event 106 may be up ahead on the road 102 and out of the detection range of sensors 446 of the autonomous vehicle 402. In certain embodiments, the system 100 comprises an oversight server 160 communicatively coupled with one or more autonomous vehicles 402, an application server 180, data providers 120, and external sensors 112 via a network 110. Network 110 allows the autonomous vehicle 402 to communicate with other components of system 100. Network 110 allows the autonomous vehicle 402 to communicate with other autonomous vehicles 402, oversight server 160, application server 180, data providers 120, external sensors 112, systems, devices, databases, and any other component. Oversight server 160 comprises a processor 162 in signal communication with a memory 168. Memory 168 stores software instructions 170 that when executed by the processor 162 cause the oversight server 160 to perform one or more operations described herein. The autonomous vehicle 402 comprises a control device 450. The control device 450 comprises a processor 122 in signal communication with a memory 126. Memory 126 stores software instructions 128 that when executed by the processor 122 cause the control device 450 to perform one or more operations described herein. In other embodiments, system 100 may not have all of the components listed and/or may have other elements instead of, or in addition to, those listed above. System 100 may be configured as shown or in any other configuration.

In general, system 100 improves the autonomous vehicle navigation in cases where an unexpected event (e.g., a route-altering event 106) is detected on a traveling path of an autonomous vehicle 402 by the control device 450 of the autonomous vehicle 402 and/or the oversight server 160. One approach to evaluate the road condition along the traveling path of the autonomous vehicle 402 is to receive and evaluate a data stream (e.g., received from a data provider) that may include road condition information (the term "road condition" encompasses weather, traffic, and road conditions in the present disclosure). However, in some cases, the data stream may be inaccurate, irrelevant, and/or unreliable for the autonomous vehicle 402. For example, the data stream may include road condition information that is not local to the autonomous vehicle 402. Thus, the road condition information may not be useful or relevant to the autonomous vehicle 402. In another example, the methodology by which the data provider gathers data, interprets weather, traffic, road conditions, and in response, produces the data stream may not accurate. In another example, the data provider may not have reliable sensor probes (e.g., due to damage from extreme weather, impact by an object, and/or wear and tear over time). Thus, the data stream produced by the sensor probes may not be accurate and reliable. Therefore, it is important to evaluate the reliability and accuracy of data streams used to evaluate the road condition ahead of the autonomous vehicle 402 and to determine the navigation plan and trajectory of the autonomous vehicle 402.

The current autonomous vehicle technology lacks the capability of evaluating the reliability and accuracy of data streams used to evaluate the road condition ahead of the autonomous vehicles 402. In other words, the current autonomous vehicle technology does not provide a solution to the technical problem of inaccurate, irrelevant, and/or unreliable data streams. The present disclosure provides technical solutions to the above-mentioned technical problem. More specifically, the present disclosure contemplates a system and method to leverage external data streams to optimize autonomous vehicle fleet operations and navigations.

The system 100 is configured to evaluate and determine the reliability and accuracy of the data streams 210 received from various data sources, and in response, determine a routing plan 136 or update the routing plan 136 for navigating the autonomous vehicle 402. Therefore, the system 100 provides a practical application of providing a technical solution to determine a more accurate and reliable data stream 210 to use for navigating autonomous vehicles 402. For example, the system 100 may be configured to evaluate whether a data stream 210 is accurate by implementing a data stream evaluation machine learning module 140. The data stream evaluation machine learning module 140 is trained to predict the accuracy of the data stream 210 based on a training dataset that includes historical evaluations and the remote operator 184's feedback. Thus, the system 100 may be configured to evaluate whether a data stream 210 is accurate based on feedback from the remote operator 184. The system 100 may use the feedback of the remote operator 184 as a training dataset for training the data stream evaluation machine learning module 140 for evaluating other instances of road conditions and data streams 210.

Furthermore, the system 100 provides an additional practical application of improving the autonomous vehicle navigation in general, and more specifically, the autonomous vehicle navigation in situations where there is a need to alter the routing plan 136 of the autonomous vehicle 402 in response to a route-altering event 106 in a traveling path of the autonomous vehicle 402. This, in turn, provides an additional practical application of providing a safer driving experience for autonomous vehicles 402, other vehicles on the road, and pedestrians. In this manner, the system 100 improves the autonomous vehicle navigation technology.

### System components

Network 110 may include any interconnecting system capable of transmitting audio, video, signals, data, messages, or any combination of the preceding. Network 110 may include all or a portion of a local area network (LAN), a wide area network (WAN), a metropolitan area network (MAN), a personal area network (PAN), a wireless PAN (WPAN), an overlay network, a software-defined network (SDN), a virtual private network (VPN), a packet data network (e.g., the Internet), a mobile telephone network (e.g., cellular networks, such as 4G or 5G), a plain old telephone (POT) network, a wireless data network (e.g., WiFi, WiGig, WiMAX, etc.), a long-term evolution (LTE) network, a universal mobile telecommunications system (UMTS) network, a peer-to-peer (P2P) network, a Bluetooth network, a near field communication (NFC) network, a Zigbee network, a Z-wave network, a WiFi network, and/or any other suitable network.

### External sensors

Each external sensor 112 may be a sensor that is configured to provide software resources, such as data stream 210 to other devices, including the oversight server 160, the control devices 450, among other components of the system 100. Examples of the external sensors 112 may include, but are not limited to, temperature sensors, camera sensors, motion sensors, Light Detection and Ranging (LiDAR) sensors, Radar sensors, Internet of Things (IoT) sensors, a sensor associated with a device indicating a location of a construction zone, humidity sensors, frost detection sensors, and any other type of sensors that can be appreciated by one of skill in the art.

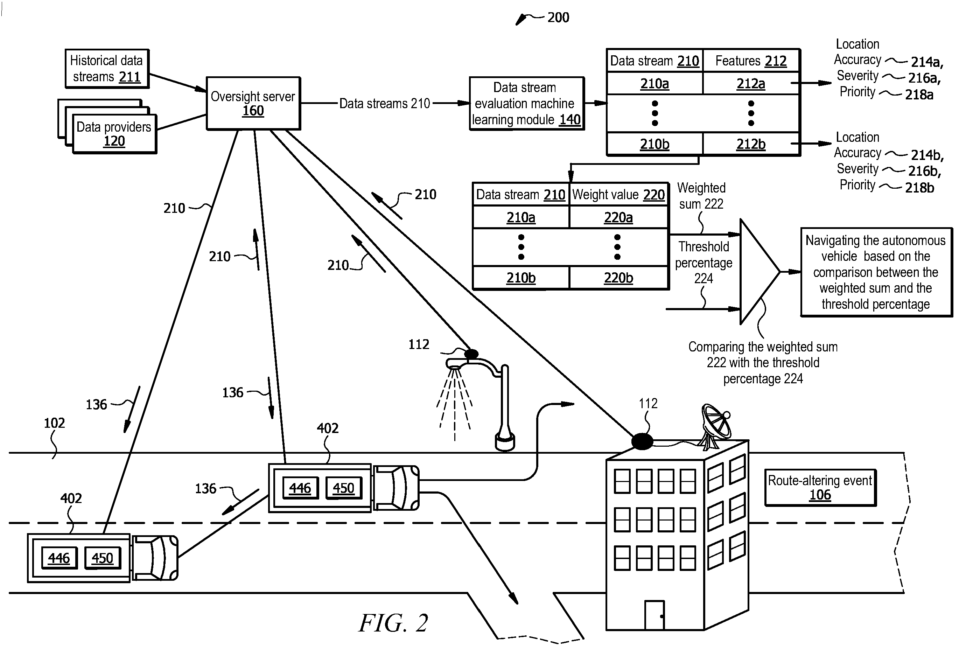

The external sensors 112 may be disposed at any suitable locations throughout a city. For example, each external sensor 112 may be located at a particular location on or around the road 102 traveled by the autonomous vehicle 402. In some examples, an external sensor 112 may be stationary. For example, an external sensor 112 may be mounted on a traffic light, a road sign, a street bench, a street light, a building, an electricity pole, and the like (see FIG. 2 for example locations of the external sensors 112). In some examples, an external sensor 112 may be mobile. For example, an external sensor 112 may be associated with and/or mounted on a vehicle, a drone, and the like.

Each external sensor 112 is communicatively coupled to other components of the system 100 via the network 110. For example, each external sensor 112 may be configured to communicate the data streams 210 via wires and/or wireless communications.

In certain embodiments, each external sensor 112 may be associated with and coupled to a computer system 114 that is configured to facilitate the communication of the external sensor 112, such as the data streams 210. Examples of the computer system 114 may include but are not limited to, a personal computer, a desktop computer, a workstation, a server, a laptop, a tablet computer, etc. The computer system 114 may include a user interface, such as a display, a microphone, keypad, or other appropriate terminal equipment usable by users. The computer system 114 may comprise a processor in signal communication with a memory to perform one or more functions of the computer system 114 described herein. For example, a software application designed using software code may be stored in the memory of the computer system 114 and executed by the processor of the computer system 114 to perform the functions of the computer system 114. The computer system 114 may communicate the data stream 210 to the oversight server 160 and/or the control devices 450 continuously, periodically (e.g., every second, every millisecond, etc.), or on demand. For example, the external sensor 112 (via the computer system 114) may implement an Application Programming Interface (API) to provide the data stream 210 to each of the oversight server 160 and control devices 450.

In certain embodiments, the external sensor 112 may communicate the data stream 210 to the control device 450 when the autonomous vehicle 402 is within a wireless communication range from the external sensor 112, such as within Wireless Fidelity (WiFi), Bluetooth, Zigbee, and the like.

### Example autonomous vehicle

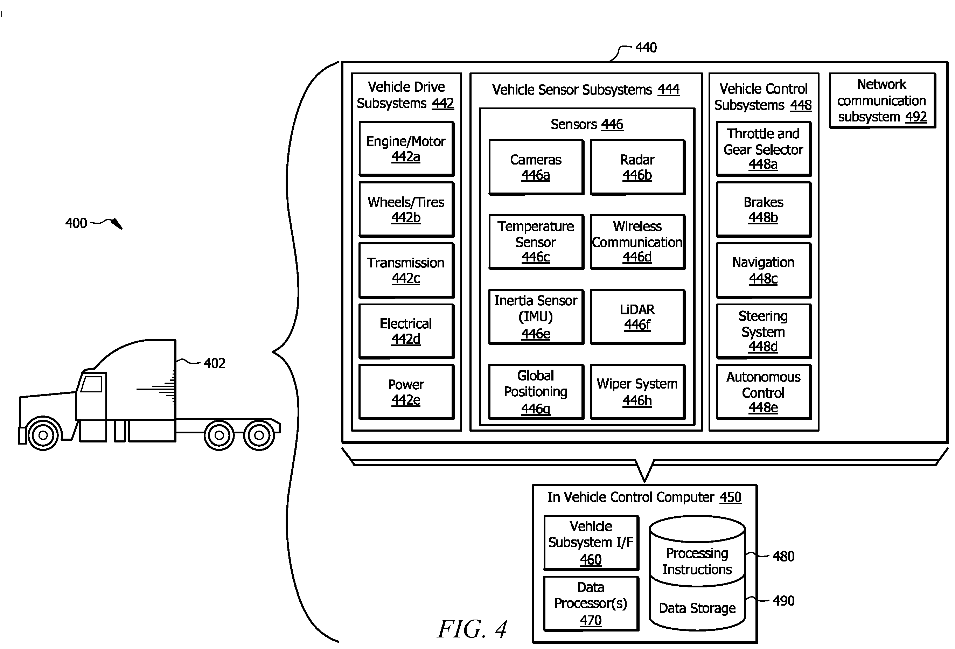

In certain embodiments, the autonomous vehicle 402 may include a semi-truck tractor unit attached to a trailer to transport cargo or freight from one location to another location (see FIG. 4). The autonomous vehicle 402 is generally configured to travel along a road in an autonomous mode. The autonomous vehicle 402 may navigate using a plurality of components described in detail in FIGS. 4-6. The operation of the autonomous vehicle 402 is described in greater detail in FIGS. 4-6. The corresponding description below includes brief descriptions of certain components of the autonomous vehicle 402.

Control device 450 may be generally configured to control the operation of the autonomous vehicle 402 and its components and to facilitate autonomous driving of the autonomous vehicle 402. The control device 450 may be further configured to determine a pathway in front of the autonomous vehicle 402 that is safe to travel and free of objects or obstacles, and navigate the autonomous vehicle 402 to travel in that pathway. This process is described in more detail in FIGS. 4-6. The control device 450 may generally include one or more computing devices in signal communication with other components of the autonomous vehicle 402 (see FIG. 4). In this disclosure, the control device 450 may interchangeably be referred to as an in-vehicle control computer 450.

The control device 450 may be configured to detect objects on and around a road traveled by the autonomous vehicle 402 by analyzing the sensor data 130 and/or map data 134. For example, the control device 450 may detect objects on and around the road by implementing object detection machine learning modules 132. The object detection machine learning modules 132 may be implemented using neural networks and/or machine learning algorithms for detecting objects from images, videos, infrared images, point clouds, audio feed, Radar data, etc. The object detection machine learning modules 132 are described in more detail further below. The control device 450 may receive sensor data 130 from the sensors 446 positioned on the autonomous vehicle 402 to determine a safe pathway to travel. The sensor data 130 may include data captured by the sensors 446.

Sensors 446 may be configured to capture any object within their detection zones or fields of view, such as landmarks, lane markers, lane boundaries, road boundaries, vehicles, pedestrians, road/traffic signs, among others. In some embodiments, the sensors 446 may be configured to detect rain, fog, snow, and/or any other weather condition. The sensors 446 may include a detection and ranging (LiDAR) sensor, a Radar sensor, a video camera, an infrared camera, an ultrasonic sensor system, a wind gust detection system, a microphone array, a thermocouple, a humidity sensor, a barometer, an inertial measurement unit, a positioning system, an infrared sensor, a motion sensor, a rain sensor, and the like. In some embodiments, the sensors 446 may be positioned around the autonomous vehicle 402 to capture the environment surrounding the autonomous vehicle 402. See the corresponding description of FIG. 4 for further description of the sensors 446.

### Control device

The control device 450 is described in greater detail in FIG. 4. In brief, the control device 450 may include the processor 122 in signal communication with the memory 126 and a network interface 124. The processor 122 may include one or more processing units that perform various functions as described herein. The memory 126 may store any data and/or instructions used by the processor 122 to perform its functions. For example, the memory 126 may store software instructions 128 that when executed by the processor 122 causes the control device 450 to perform one or more functions described herein.

The processor 122 may be one of the data processors 470 described in FIG. 4. The processor 122 comprises one or more processors operably coupled to the memory 126. The processor 122 may be any electronic circuitry, including state machines, one or more central processing unit (CPU) chips, logic units, cores (e.g., a multi-core processor), field-programmable gate arrays (FPGAs), application-specific integrated circuits (ASICs), or digital signal processors (DSPs). The processor 122 may be a programmable logic device, a microcontroller, a microprocessor, or any suitable combination of the preceding. The processor 122 may be communicatively coupled to and in signal communication with the network interface 124 and memory 126. The one or more processors may be configured to process data and may be implemented in hardware or software. For example, the processor 122 may be 8-bit, 16-bit, 32-bit, 64-bit, or of any other suitable architecture. The processor 122 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors may be configured to implement various instructions. For example, the one or more processors may be configured to execute software instructions 128 to implement the functions disclosed herein, such as some or all of those described with respect to FIGS. 1-6. In some embodiments, the function described herein is implemented using logic units, FPGAs, ASICs, DSPs, or any other suitable hardware or electronic circuitry.

Network interface 124 may be a component of the network communication subsystem 492 described in FIG. 4. The network interface 124 may be configured to enable wired and/or wireless communications. The network interface 124 may be configured to communicate data between the autonomous vehicle 402 and other devices, systems, or domains. For example, the network interface 124 may comprise an NFC interface, a Bluetooth interface, a Zigbee interface, a Z-wave interface, a radio-frequency identification (RFID) interface, a WIFI interface, a local area network (LAN) interface, a wide area network (WAN) interface, a metropolitan area network (MAN) interface, a personal area network (PAN) interface, a wireless PAN (WPAN) interface, a modem, a switch, and/or a router. The processor 122 may be configured to send and receive data using the network interface 124. The network interface 124 may be configured to use any suitable type of communication protocol as would be appreciated by one of ordinary skill in the art.

The memory 126 may be one of the data storages 490 described in FIG. 4. The memory 126 may be volatile or non-volatile and may comprise read-only memory (ROM), random-access memory (RAM), ternary content-addressable memory (TCAM), dynamic random-access memory (DRAM), and static random-access memory (SRAM). The memory 126 may include one or more of a local database, cloud database, network-attached storage (NAS), etc. The memory 126 may store any of the information described in FIGS. 1-6 along with any other data, instructions, logic, rules, or code operable to implement the function(s) described herein when executed by processor 122. For example, the memory 126 may store software instructions 128, sensor data 130, object detection machine learning module 132, map data 134, routing plan 136, driving instructions 138, data stream evaluation machine learning module 140, data streams 210, historical data streams 211, features 212a-b, weight values 220a-b, weighted sum 222, threshold percentage 224, route-altering event 106, and/or any other data/instructions. The software instructions 128 include code that when executed by the processor 122 causes the control device 450 to perform the functions described herein, such as some or all of those described in FIGS. 1-6. The memory 126 comprises one or more disks, tape drives, or solid-state drives, and may be used as an over-flow data storage device to store programs when such programs are selected for execution, and to store instructions and data that are read during program execution.

Object detection machine learning modules 132 may be implemented by the processor 122 executing software instructions 128, and may be generally configured to detect objects and obstacles from the sensor data 130. The object detection machine learning modules 132 may be implemented using neural networks and/or machine learning algorithms for detecting objects from any data type, such as images, videos, infrared images, point clouds, audio feed, Radar data, etc.

In some embodiments, the object detection machine learning modules 132 may be implemented using machine learning algorithms, such as Support Vector Machine (SVM), Naive Bayes, Logistic Regression, k-Nearest Neighbors, Decision Trees, or the like. In some embodiments, the object detection machine learning modules 132 may utilize a plurality of neural network layers, convolutional neural network layers, Long-Short-Term-Memory (LSTM) layers, Bi-directional LSTM layers, recurrent neural network layers, and/or the like, in which weights and biases of these layers are optimized in the training process of the object detection machine learning modules 132. The object detection machine learning modules 132 may be trained by a training dataset that may include samples of data types labeled with one or more objects in each sample. For example, the training dataset may include sample images of objects (e.g., vehicles, lane markings, pedestrians, road signs, obstacles, etc.) labeled with object(s) in each sample image. Similarly, the training dataset may include samples of other data types, such as videos, infrared images, point clouds, audio feed, Radar data, etc. labeled with object(s) in each sample data. The object detection machine learning modules 132 may be trained, tested, and refined by the training dataset and the sensor data 130. The object detection machine learning modules 132 use the sensor data 130 (which are not labeled with objects) to increase their accuracy of predictions in detecting objects. For example, supervised and/or unsupervised machine learning algorithms may be used to validate the predictions of the object detection machine learning modules 132 in detecting objects in the sensor data 130.

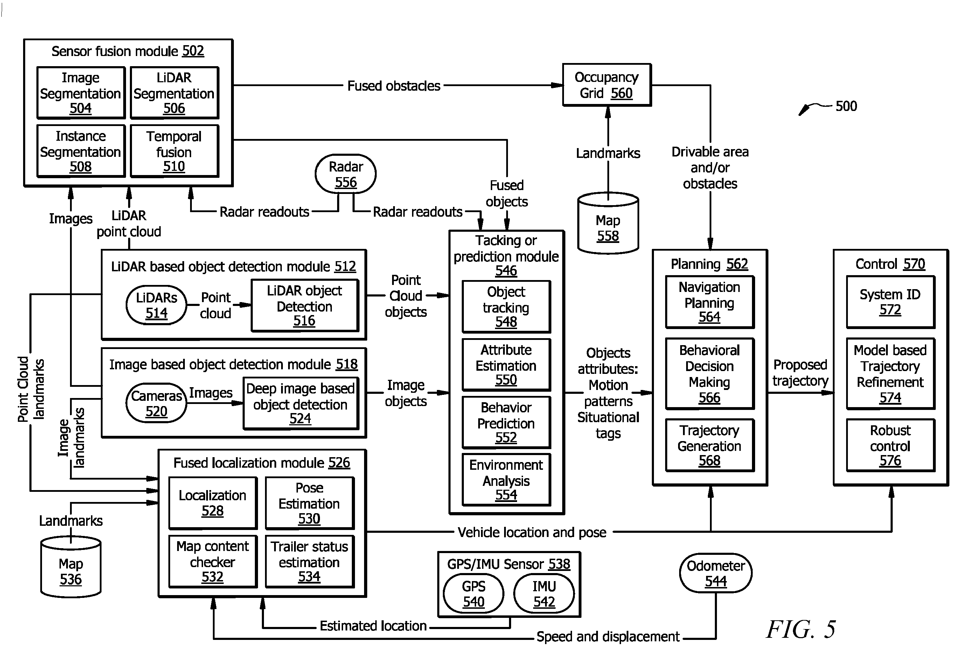

Map data 134 may include a virtual map of a city or an area that includes the road traveled by an autonomous vehicle 402. In some examples, the map data 134 may include the map 558 and map database 536 (see FIG. 5 for descriptions of the map 558 and map database 536). The map data 134 may include drivable areas, such as roads, paths, highways, and undrivable areas, such as terrain (determined by the occupancy grid module 560, see FIG. 5 for descriptions of the occupancy grid module 560). The map data 134 may specify location coordinates of road signs, lanes, lane markings, lane boundaries, road boundaries, traffic lights, obstacles, etc.

Routing plan 136 may be a plan for traveling from a start location (e.g., a first autonomous vehicle launchpad/landing pad) to a destination (e.g., a second autonomous vehicle launchpad/landing pad). For example, the routing plan 136 may specify a combination of one or more streets, roads, and highways in a specific order from the start location to the destination. The routing plan 136 may specify stages, including the first stage (e.g., moving out from a start location/launch pad), a plurality of intermediate stages (e.g., traveling along particular lanes of one or more particular street/road/highway), and the last stage (e.g., entering the destination/landing pad). The routing plan 136 may include other information about the route from the start position to the destination, such as road/traffic signs in that routing plan 136, etc.

Driving instructions 138 may be implemented by the planning module 562 (See descriptions of the planning module 562 in FIG. 5.). The driving instructions 138 may include instructions and rules to adapt the autonomous driving of the autonomous vehicle 402 according to the driving rules of each stage of the routing plan 136. For example, the driving instructions 138 may include instructions to stay within the speed range of a road traveled by the autonomous vehicle 402, adapt the speed of the autonomous vehicle 402 with respect to observed changes by the sensors 446, such as speeds of surrounding vehicles, objects within the detection zones of the sensors 446, etc.

Data stream evaluation machine learning module 140 may be implemented by the processor 122 executing software instructions 128, and may be generally configured to evaluate the data streams 210 to determine whether each data stream 210 is relevant to the autonomous vehicle 402. For example, the data stream evaluation machine learning module 140 may determine that a data stream 210 is relevant to the autonomous vehicle 402 and the navigation of the autonomous vehicle 402 if it is determined that the data stream 210 is local (i.e., includes local road condition information) with respect to the current location of the autonomous vehicle 402. Otherwise, if it is determined that the data stream 210 is not local (i.e., does not include local road condition information) with respect to the current location of the autonomous vehicle 402, the stream evaluation machine learning module 140 may determine that the data stream 210 is not relevant for the navigation of the autonomous vehicle 402.

In some embodiments, the data stream evaluation machine learning module 140 may be implemented using machine learning algorithms, such as SVM, Naive Bayes, Logistic Regression, k-Nearest Neighbors, Decision Trees, or the like. In some embodiments, the data stream evaluation machine learning module 140 may utilize a plurality of neural network layers, convolutional neural network layers, LSTM layers, Bi-directional LSTM layers, recurrent neural network layers, and/or the like, in which weights and biases of these layers are optimized in the training process of the data stream evaluation machine learning module 140.

In some embodiments, to determine whether a route-altering event 106 is present on the road 102, the control device 450 may communicate the sensor data 130, and data streams 210 to the oversight server 160. In some embodiments, the oversight server 160 may receive the data streams 210 from the data providers 120 and/or external sensors 112 in addition to or instead of autonomous vehicle(s) 402.

The remote operator 184 may access and review the sensor data 130 and provide feedback to the oversight server 160 and the control device 450 indicating whether the received data indicates the route-altering event 106. The data stream evaluation machine learning module 140 may use the feedback of the remote operator 184 as a training dataset to determine the relationship and associations between the data streams 210 and the indication of route-altering event 106.

In some embodiments, the data stream evaluation machine learning module 140 may be trained by the training dataset that may include samples of data stream 210 types labeled with indications of route-altering event 106 (and optionally objects) in each sample. For example, the training dataset may include sample images of an environment at least in front of the autonomous vehicle 402, that include, for example, indications of weather conditions (such as, light rain, medium rain, heavy rain, light wind, medium wind, heavy wind, light snow, medium snow, heavy snow, flood, and the like), indications of road condition (such as icy road, road cracks, debris, construction zone obstructions, road closures, objects, obstacles, and the like), indications of perception (such as low visibility, medium visibility, high visibility) for example due to fog, indications of traffic condition (such as congested traffic, medium traffic, low traffic, no traffic) labeled with each of the weather, road, perception, and traffic indications in each sample image. Similarly, the training dataset may include samples of other data types, such as videos, infrared images, point clouds, audio feed, Radar data, etc., labeled with each of the weather, road, perception, and traffic indications in each sample data. The weather, road, perception, and traffic condition indications may collectively be referred to herein as a road condition indication. The data stream evaluation machine learning module 140 may be trained, tested, and refined by the training dataset and the data streams 210. Thus, the data stream evaluation machine learning module 140 may use the training dataset to learn the associations and relationships between each sample data stream 210 and a respective indication of route-altering event 106. The data stream evaluation machine learning module 140 uses the data streams 210 (which are not labeled with weather, road, perception, and traffic indications) to increase the accuracy of predictions in detecting weather, road, perception, and traffic indications. For example, supervised and/or unsupervised machine learning algorithms may be used to validate the predictions of the data stream evaluation machine learning module 140 in detecting the weather, road, perception, and traffic indications from the data streams 210.

### Data providers

Each data provider 120 may be an entity (e.g., an organization) that provides data stream 210 to its subscribers or users. Each data provider 120 may be a different organization compared to other data providers 120. Examples of the data providers 120 may include, but are not limited to, weather data providers (such as national and local weather data news providers), traffic data providers (such as national and local traffic data providers), road condition data providers, law enforcement alert data providers, emergency alert data providers, among other data type providers.

Each data provider 120 may provide a particular data stream 210. Examples of the data streams 210 may include, but are not limited to, weather data, traffic data, road condition data, law enforcement data, and emergency alert data, among other data types.

Each data provider 120 may include or be associated with a server 121. The server 121 is generally a device that is configured to process data and communicate data stream 210 to computing devices (e.g., the oversight server 160, control device 450), etc., via the network 110. Examples of the server 121 may include, but are not limited to, a personal computer, a desktop computer, a workstation, a server, a laptop, a tablet computer, etc. The server 121 may include a user interface, such as a display, a microphone, keypad, or other appropriate terminal equipment usable by users. Each server 121 may comprise a processor in signal communication with a memory to perform one or more functions of the data provider 120 described herein. For example, a software application designed using software code may be stored in the memory of the server 121 and executed by the processor of the server 121 to perform the functions of the data provider 120. The data provider 120 may communicate the data stream 210 to the oversight server 160 and/or the control device 450 continuously, periodically (e.g., every second, every millisecond, etc.), or on demand.

In certain embodiments, the data provider 120 may use an API to communicate the data stream 210. For example, the oversight server 160 may send an API request to the data provider 120 to receive the data stream 210. In response, the data provider 120 may communicate an API response that includes the data stream 210 to the oversight server 160. The same may apply to the control device 450. For example, the control device 450 may send an API request to the data provider 120 to receive the data stream 210. In response, the data provider 120 may communicate an API response that includes the data stream 210 to the control device 450.

### Oversight server

Oversight server 160 may include one or more processing devices and is generally configured to oversee the operations of the autonomous vehicle 402 while they are in transit and oversee the traveling of the autonomous vehicle 402 and/or while they are in a terminal. The oversight server 160 may provide software and/or hardware resources (e.g., map data 134, routing recommendations, feedback from the remote operator 184 on autonomous vehicle navigation, feedback from the remote operator 184 on the data streams 210 regarding road conditions indication, and the like) to the autonomous vehicles 402. The oversight server 160 may comprise a processor 162, a network interface 164, a user interface 166, and a memory 168. The components of the oversight server 160 are operably coupled with each other. The processor 162 may include one or more processing units that perform various functions of the oversight server 160. The memory 168 may store any data and/or instructions used by the processor 162 to perform its functions. For example, the memory 168 may store software instructions 170 that when executed by the processor 162 cause the oversight server 160 to perform one or more functions described herein. The oversight server 160 may be configured as shown or in any other suitable configuration.

In certain embodiments, the oversight server 160 may be implemented by a cluster of computing devices that may serve to oversee the operations of the autonomous vehicle 402. For example, the oversight server 160 may be implemented by a plurality of computing devices using distributed computing and/or cloud computing systems. In another example, the oversight server 160 may be implemented by a plurality of computing devices in one or more data centers. As such, In certain embodiments, the oversight server 160 may include more processing power than the control device 450. The oversight server 160 is in signal communication with the autonomous vehicle 402 and its components (e.g., the control device 450).

Processor 162 comprises one or more processors. The processor 162 may be any electronic circuitry, including state machines, one or more CPU chips, logic units, cores (e.g., a multi-core processor), FPGAs, ASICs, or DSPs. The processor 162 may be a programmable logic device, a microcontroller, a microprocessor, or any suitable combination of the preceding. The processor 162 may be communicatively coupled to and in signal communication with the network interface 164, user interface 166, and memory 168. The one or more processors are configured to process data and may be implemented in hardware or software. For example, the processor 162 may be 8-bit, 16-bit, 32-bit, 64-bit or of any other suitable architecture. The processor 162 may include an ALU for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute software instructions 170 to implement the functions disclosed herein, such as some or all of those described with respect to FIGS. 1-6. In some embodiments, the function described herein may be implemented using logic units, FPGAs, ASICs, DSPs, or any other suitable hardware or electronic circuitry.

Network interface 164 may be configured to enable wired and/or wireless communications of the oversight server 160. The network interface 164 may be configured to communicate data between the oversight server 160 and other devices, servers, autonomous vehicles 402, systems, or domains. For example, the network interface 164 may comprise an NFC interface, a Bluetooth interface, a Zigbee interface, a Z-wave interface, an RFID interface, a WIFI interface, a LAN interface, a WAN interface, a PAN interface, a modem, a switch, and/or a router. The processor 162 may be configured to send and receive data using the network interface 164. The network interface 164 may be configured to use any suitable type of communication protocol as would be appreciated by one of ordinary skill in the art.

User interface 166 may include one or more user interfaces that are configured to interact with users, such as the remote operator 184. The remote operator 184 may access the oversight server 160 via the communication path 186. In certain embodiments, the user interface 166 may include peripherals of the oversight server 160, such as monitors, keyboards, mouse, trackpads, touchpads, microphones, webcams, speakers, and the like. In certain embodiments, the user interface 166 may include a graphical user interface, a software application, or a web application. The remote operator 184 may use the user interface 166 to access the memory 168 to review any data stored in the memory 168. The remote operator 184 may confirm, update, and/or override the routing plan 136 and/or any other data stored in memory 168.

Memory 168 may be volatile or non-volatile and may comprise ROM, RAM, TCAM, DRAM, and SRAM. The memory 168 may include one or more of a local database, cloud database, NAS, etc. Memory 168 may store any of the information described in FIGS. 1-6 along with any other data, instructions, logic, rules, or code operable to implement the function(s) described herein when executed by processor 162. For example, the memory 168 may store software instructions 170, sensor data 130, object detection machine learning module 132, map data 134, routing plan 136, driving instructions 138, data stream evaluation machine learning module 140, data streams 210, historical data streams 211, features 212a-b, weight values 220a-b, weighted sum 222, threshold percentage 224, route-altering event 106, and/or any other data/instructions. The software instructions 170 may include code that when executed by the processor 162 causes the oversight server 160 to perform the functions described herein, such as some or all of those described in FIGS. 1-6. The memory 168 comprises one or more disks, tape drives, or solid-state drives, and may be used as an over-flow data storage device, to store programs when such programs are selected for execution, and to store instructions and data that are read during program execution. Other information stored in the memory 168 are described above.

In certain embodiments, the navigating solutions such as routing plans 136, indications of road conditions for the autonomous vehicle 402 may be determined from Vehicle-to-Vehicle (V2V) communications, such as one autonomous vehicle 402 with another. In certain embodiments, navigating solutions such as routing plans 136, indications of road conditions for the autonomous vehicle 402 may be determined from Vehicle-to-Cloud (V2C) communications, such as the autonomous vehicle 402 with the oversight server 160, or vice versa.

In certain embodiments, the navigating solutions such as routing plans 136, indications of road conditions for the autonomous vehicle 402 may be implemented by Vehicle-to-Cloud-to-Human (V2C2H), Vehicle-to-Human (V2H), Vehicle-to-Cloud-to-Vehicle (V2C2V), Vehicle-to-Human-to-Vehicle (V2H2V), and/or Cloud-to-Cloud-to-Vehicle (C2C2V) communications, where human intervention is incorporated in determining navigating solutions for the autonomous vehicles 402 and/or the indications of road conditions. For example, the remote operator 184 may review the data stream 210, sensor data 130, and/or other data and determine a road condition and a navigation plan (e.g., routing plan 136) for the autonomous vehicle 402. The remote operator 184 may add a human perspective in determining the routing plans 136 of the autonomous vehicles 402 that the control device 450 and/or the oversight server 160 otherwise do not provide. In some instances, the human perspective is preferable compared to machine's perspective in terms of safety, fuel-saving, etc. The control device 450 and the oversight server 160 learn from the feedback provided by the remote operator 184 and use the provided feedback as a training dataset to improve the accuracy of their prediction regarding the road condition inferred from the data streams 210 and the navigation plans for the autonomous vehicles 402.

In certain embodiments, the routing plans 136, updated routing plans 136, and/or indications of road conditions for the autonomous vehicles 402 may be implemented by any combination of V2V, V2C, V2C2H, V2H, V2C2V, V2H2V, C2C2V communications, among other types of communications.

### Application server

The application server 180 may be any computing device configured to communicate with other devices, such as the oversight server 160, autonomous vehicles 402, databases, systems, etc., via the network 110. The application server 180 may be configured to perform functions described herein and interact with the remote operator 184, e.g., via communication path 182 using its user interfaces. Examples of the application server 180 include, but are not limited to, desktop computers, laptop computers, servers, etc. In one example, the application server 180 may act as a presentation layer from which the remote operator 184 can access the oversight server 160. As such, the oversight server 160 may send the routing plan 136, sensor data 130, data streams 210, detection of route-altering event 106, autonomous vehicle navigation in response to a route-altering event 106, and/or any other data/instructions to the application server 180, e.g., via the network 110. The remote operator 184, after establishing the communication path 182 with the application server 180 and/or the oversight server 160, may review the received data and confirm, update, and/or override any of the routing plan 136, autonomous vehicle navigation in response to a route-altering event 106, detection of a route-altering event 106, for example. Similarly, the remote operator 184, after establishing the communication path 186 with the oversight server 160, may review and confirm, update, and/or override any of the routing plan 136, autonomous vehicle navigation in response to a route-altering event 106, detection of a route-altering event 106, for example. The oversight server 160 and the control device 450 may learn from the feedback of the remote operator 184 to improve future determinations and autonomous vehicle navigations.

The remote operator 184 may be an individual who is associated with and has access to the oversight server 160. For example, the remote operator 184 may be an administrator that can access and view the information regarding the autonomous vehicle 402, such as sensor data 130, data streams 210, driving instructions 138, routing plan 136, autonomous vehicle navigation in response to a route-altering event 106, detection of a route-altering event 106, and other information that is available on the memory 168. In one example, the remote operator 184 may access the oversight server 160 from the application server 180 which is acting as a presentation layer via the network 110.

### Operational flow for leveraging external data streams to optimize autonomous vehicle fleet operations

FIG. 2 illustrates an example operational flow 200 of system 100 of FIG. 1 for leveraging external data streams to optimize autonomous vehicle fleet operations and navigations. In an example scenario, assume that the autonomous vehicle 402 is traveling on the road 102 according to the predetermined routing plan 136 for reaching a predetermined destination.

While traveling on the road 102, the control device 450 may receive sensor data 130 from the sensors 446 to determine an obstacle-fee traveling path for the autonomous vehicle 402. Meanwhile, the oversight server 160 receives a plurality of data streams 210 from various data sources including the data providers 120, and external sensors 112, similar to that described in FIG. 1, e.g., via API calls/requests and responses.

In some embodiments, the oversight server 160 may also receive data streams 210 from the internal sensors 446 associated with the autonomous vehicle 402. In a case where the data source is the internal, or onboard, sensors 446, the sensor data 130 may be included in the data stream 210 that the sensors 446 communicate to the oversight server 160. In some embodiments, the oversight server 160 may also receive data streams 210 from one or more other autonomous vehicles 402. The received data streams 210 from one or more other autonomous vehicles 402 may include data from other autonomous vehicles travelling along a same route as the autonomous vehicle 402. For example, the autonomous vehicle 402 may receive data stream 210 from one or more autonomous vehicles 402 travelling ahead of the autonomous vehicle 402. Data from other autonomous vehicles travelling ahead of the autonomous vehicle may include traffic congestion data, emergency vehicle or personnel detection data, weather information, and the like. In some embodiments, the data streams from one or more other autonomous vehicles may include data from other autonomous vehicles travelling along the same route as the autonomous vehicle which are behind the autonomous vehicle. Data from other autonomous vehicles travelling behind the autonomous vehicle may include audio data indicating an approaching emergency vehicle, data indicating an erratic or non-compliant behaving vehicle approaching (e.g., speeding vehicle or a vehicle weaving in and out of traffic), and the like.

In some embodiments, the data streams 210 may include historical data streams 211. The oversight server 160 may access and retrieve the historical data stream 211 stored in the memory 168. The historical data streams 211 may be historical records of data streams 210 that indicate a trend of the data streams 210. The historical data stream 211 may indicate historical records or information about the road 102 included in the routing plan 136 ahead of the autonomous vehicle 402.

Each of the data streams 210 may provide information about the environment associated with at least a portion of the road 102 in the predetermined routing plan 136 ahead of the autonomous vehicle 402. For example, each data stream 210 may provide information about the weather condition, traffic condition, road condition, and perception condition (collectively referred to herein as a road condition) associated with a portion of the road 102 on the traveling path of the autonomous vehicle 402.

In certain embodiments, each data stream 210 may include an image feed, a video feed, a Radar data feed, a LiDAR data feed, a temperature data feed, a motion data feed, a humidity data feed, a location of object data feed, and any other data type feed.

### Determining whether the data streams in the aggregate indicate a route-altering event

In response to receiving the data steams 210, the oversight server 160 may evaluate and process the data streams 210 to determine whether the data streams 210 in the aggregate indicate a route-altering event 106 - that may be within or outside of the detection range of sensors 446 of the autonomous vehicle 402. In this process, the oversight server 160 may feed the data streams 210 to the data stream evaluation machine learning module 140. The oversight server 160 (via the data stream evaluation machine learning module 140) may perform the following operations on each data stream 210.

The oversight server 160 may extract a set of features from 212 from the data stream 210. In the illustrated example of FIG. 2, the oversight server 160 may extract a set of features 212a from the data stream 210a, and extract a set of features 212b from the data stream 210b. The data streams 210a-b are instances of the data stream 210. Each set of features 212 may be represented by a feature vector that comprises numerical values. Each feature vector provide information about the respective data stream 210 and the road condition indicated in the respective data stream 210.

The oversight server 160 may determine whether each data stream 210 provides information about a geographical location area that is local with respect to the current location of the autonomous vehicle 402. For example, assume that the data stream 210a provides information about a geographical location area that is local with respect to the current location of the autonomous vehicle 402. Thus, in this example, the oversight server 160, based on the first set of features 212a, may determine that the data stream 210a provides information about a geographical location area that is local with respect to the current location of the autonomous vehicle 402. For example, the oversight server 160 may determine that first set of features 212a and/or data stream 210a includes an indication of a geographical location (e.g., a Global Positioning System (GPS) location area) that is within a threshold distance or range (e.g., within one mile, two miles, etc.) of the autonomous vehicle 402. In response, the oversight server 160 may determine that the data stream 210a provides local information about the road condition with respect to the current location of the autonomous vehicle 402.

In this manner, the oversight server 160 may determine the location accuracy 214 associated with each data stream 210. In one example, if it is determined that a particular data stream 210 provides local information with respect to the current location of the autonomous vehicle 402, the oversight server 160 may determine that the location accuracy 214a associated with the particular data stream 210 is high (e.g., more than a threshold percentage, such as more than 80%, 85%, etc.). In other words, the oversight server 160 may determine that the particular data stream 210 provides reliable and relevant information in terms of the location of the provided information (included in the data stream 210) about the road condition. Otherwise, the oversight server 160 may determine that the particular data stream 210 does not provide reliable or relevant information in terms of the location of the provided information (included in the data stream 210) about the road condition. In the illustrated example, the oversight server 160 may determine the location accuracy 214a associated with the data stream 210a, and the location accuracy 214b associated with the data stream 210b. The location accuracy 214 associated with a data stream 210 may be indicated by a scale of 1 to 10 or in percentage form, for example.

In certain embodiments, the oversight server 160 may determine a severity 216 of the road condition indicated in or inferred from each data stream 210 and the respective features 212 by analyzing the data stream 210 and the respective features 212. The severity 216 of the road condition may indicate the criticality or degree of potential impact of the road condition, such that whether or not the autonomous vehicle 402 is able to autonomously drive through the road with the road condition. For example, the oversight server 160 may determine that the severity 216 of the road condition indicated in a data stream 210 is 1 out of 10 or 10% if it is determined that the respective set of features 212 extracted from the data stream 210 includes characteristics that indicate that the autonomous vehicle 402 is able to autonomously drive through the road with the severity 216 of the road condition, such as low rain, no rain, no traffic, low traffic, and the like. In the illustrated example, the oversight server 160 may determine the severity 216a associated with the data stream 210a, and the severity 216b associated with the data stream 210b. The severity 216 of the road condition may be indicated by a scale ( e.g., of 1 to 10) or in percentage form, for example.

In certain embodiments, the oversight server 160 may determine a priority 218 associated with a road condition indicated in or inferred from each data stream 210 and the respective features 212 by analyzing the data stream 210 and the respective features 212. The priority 218 associated with the road condition may indicate how time-sensitive it is to take action in response to the detected road condition indicated in or inferred from each data stream 210.

In some embodiments, the priority 218 associated with the road condition is determined based on the respective severity 216, location accuracy 214, and the detected road condition. For example, if it is determined that the severity 216 of the road condition is high (e.g., more than 80%, 85%, etc.), and that the location accuracy 214 of the data stream 210 is high (e.g., 70%, 75%, etc.), and that the detected road condition indicates the route-altering event 106, it may mean that the data stream 210 provides local information about the road and the road condition is such that the autonomous vehicle 402 is not able to drive through the road. Thus, in this example, it is time-sensitive to take action to update the navigation of the autonomous vehicle 402. Thus, in this example, the priority 218 associated with the road condition may be determined to be high (e.g., 80%, 85%, etc.).

In another example, if it is determined that the severity 216 of the road condition is low (e.g., less than 40%, 35%, etc.), and that the location accuracy 214 of the data stream 210 is high (e.g., 70%, 75%, etc.), and that the detected road condition does not indicate the route-altering event 106, it may mean that the data stream 210 provides local information about the road and the road condition is such that the autonomous vehicle 402 is able to drive through the road. Thus, in this example, it is determined that it is not time-sensitive to take action to update the navigation of the autonomous vehicle 402. Thus, the priority 218 associated with the road condition is determined to be low (e.g., 20%, 25%, etc.).

In another example, if it is determined that the priority 218 associated with the road condition is high (e.g., more than 80%, 85%, etc.), and that the road condition indicates the route-altering event 106, an updated routing plan 136 may be determined (by the oversight server 160 and/or the remote operator 184) and communicated to the autonomous vehicle 402.

In the illustrated example, the oversight server 160 may determine the priority 218a associated with the data stream 210a, and the priority 218b associated with the data stream 210b. The priority 218 associated with the road condition may be indicated by a scale of 1 to 10 or in percentage form, for example.

Following the example above regarding evaluating the data stream 210a, assume that the data stream 210a indicates the route-altering event 106 for the autonomous vehicle 402. Therefore, the first set of features 212a may include an indication of the route-altering event 106. Thus, in this example, the oversight server 160 may determine, based on the set of features 212a, that the data stream 210a indicates or include an indication of the route-altering event 106. Examples of the route-altering event 106 may include an extreme weather condition, a congested traffic condition, a poor or undrivable road condition, a low visibility condition, an event that prevents or impedes the autonomous driving of the autonomous vehicle 402, among any other event that would lead to unsafe driving condition and/or less than a threshold percentage confidence score (e.g., less than 60%, 55%, etc.) that the autonomous vehicle 402 is able to drive through the detected event safely.

As mentioned above, the oversight server 160 may evaluate and perform the above operations for each data stream 210. With respect to the data stream 210b, the oversight server 160 (via the data stream evaluation machine learning module 140) may extract the second set of features 212b from the data stream 210b. For example, assume that the data stream 210b provides information about a geographical location area that is not local with respect to the current location of the autonomous vehicle 402. Thus, in this example, the oversight server 160 may determine that the second set of features 212b and/or the data stream 210b includes an indication of a geographical location (e.g., a GPS location area) that is outside of a threshold distance or range (e.g., outside of ten miles, eleven miles, etc.) from the autonomous vehicle 402.

In response, the oversight server 160 may determine that the data stream 210b does not provide local information about the road condition with respect to the current location of the autonomous vehicle 402. In this manner, the oversight server 160 may determine the location accuracy 214b associated with the data stream 210b, and that the location accuracy 214b is low or less than a threshold percentage (e.g., less than 40%, 35%, etc.). In other words, the oversight server 160 may determine that the data stream 210b does not provide reliable or relevant information in terms of the location of the provided information (included in the data stream 210b) about the road condition.

The oversight server 160 may also determine the severity 216b and priority 218b associated with the road condition indicated or inferred from the data stream 210b by analyzing data stream 210b and the features 212b, similar to that described above with respect to determining the severity 216a and priority 218a associated with the road condition indicated or inferred from the data stream 210a and features 212a.

In the illustrated example, assume that the data stream 210b does not include an indication of the route-altering event 106. Thus, the oversight server 160 may determine that an indication of the route-altering event 106 is absent in the data stream 210b based on the set of features 212b.

### Assigning weight values to each data stream

The oversight server 160 may assign a particular weight value 220 to each data stream 210 based on the features 212, location accuracy 214, severity 216, and priority 218 associated with the respective data stream 210. For example, the assigned weight value 220 may assign a high weight value 220 (e.g., more than a threshold value, such as more than 8 out of 10) to a particular data stream 210 if the particular data stream 210 provides local information about the road condition with respect to the location of the autonomous vehicle 402 as indicated by the respective location accuracy 214.

In certain embodiments, the oversight server 160 may also determine that the weight value 220 to be assigned to the particular data stream 210 should be high if the severity 216 and priority 218 associated with the particular data stream 210 are high (e.g., more than 80%, 85%, etc.). In the illustrated example, the oversight server 160 may assign the weight value 220a to the data stream 210a, and weight value 220b to the data stream 210b.

In the illustrated example as described above, at least because the data stream 210a is local with respect to the location of the autonomous vehicle 402 (i.e., provides location information about the road condition with respect to the location of the autonomous vehicle 402) as indicated by the location accuracy 214a) and that the data stream 210b is not local with respect to the location of the autonomous vehicle 402 (i.e., does not provide location information about the road condition with respect to the location of the autonomous vehicle 402), the weight value 220a is more than the weight value 220b. Similarly, the oversight server 160 may assign other weight values 220 to other data streams 210.

### Navigating the autonomous vehicle based on the data streams

The oversight server 160 may determine the weighted sum 222 associated with the data streams 210 using the weight values 220. In certain embodiments, the oversight server 160 may determine the weighted sum 222 by calculating the product of each weight value 220 multiplied by a respective indication of route-altering event 106 (e.g., "1" as an indication of the presence of the route-altering event 106 and "0" as an indication of absence of the route-altering event 106 in the data stream 210). In certain embodiments, the oversight server 160 may determine the weighted sum 222 associated with the data streams 210 by any suitable technique.

The oversight server 160 may compare the determined weighted sum 222 with a threshold percentage 224. For example, the oversight server 160 may determine a normalized weighted sum 222 out of 100 and compare it with the threshold percentage 224. The threshold percentage 224 maybe 80%, 85%, or any other suitable value.

The oversight server 160 may determine the navigation plan for the autonomous vehicle 402 based on the comparison between the weighted sum 222 and the threshold percentage 224. If the oversight server 160 determines that the weighted sum 222 is more than the threshold percentage 224, the oversight server 160 may update the predetermined routing plan 136 such that the autonomous vehicle 402 avoids the route-altering event 106. For example, the updated routing plan 136 may include instructions to re-route the autonomous vehicle 402, instructions to stop the autonomous vehicle 402, instructions to pull over the autonomous vehicle 402 to a side of the road 102, instructions to delay the departure of the autonomous vehicle 402 form a launch pad (if the autonomous vehicle 402 has not left the launch pad yet), instructions for the autonomous vehicle 402 to return to the launch pad if the autonomous vehicle 402 has left the launch pad and is within a threshold distance from the launch pad (e.g., within one mile, five miles, ten miles, etc.). In some examples, the updated routing plan 136 may include instructions to change the driving behavior of the autonomous vehicle 402, such as reducing speed, increasing the distance between the autonomous vehicle and a vehicle ahead, changing lanes, and the like.

In certain embodiments, the updated routing plan 136 may be determined such that the updated routing plan 136 leads to satisfying one or more trip requirements comprising a desired arrival time, optimizing a desired fuel-saving parameter, optimizing a vehicle health, or optimizing a cargo health.

In certain embodiments, the remote operator 184 (see FIG. 1) may evaluate the data streams 210, determine whether the route-altering event 106 is indicated in or inferred from the data streams 210, and in response to detecting the route-altering event 106, determine the updated routing plan 136 for the autonomous vehicle 402 to avoid the route-altering event 106.

In certain embodiments, the oversight server 160 may use the determination of the remote operator 184 (see FIG. 1) to train the data stream evaluation machine learning module 140 to predict whether the data streams 210 in the aggregate indicate the route-altering event 106 in future evaluations, similar to that described in FIG. 1.

In certain embodiments, the remote operator 184 (see FIG. 1) may confirm, update, or override the determinations and predications of the oversight server 160 regarding the weight values 220 and indications of route-altering events 106 inferred from the data streams 210. The oversight server 160 may use the feedback of the remote operator 184 (see FIG. 1) as training dataset to improve the accuracy of its determinations and predications. In response to determining the updated routing plan 136, the oversight server 160 may communicate the updated routing plan 136 to the autonomous vehicle 402. If it is determined that the weighted sum 222 is less than the threshold percentage 224, the autonomous vehicle 402 may continue its travel according to the initial routing plan 136.

In certain embodiments, the oversight server 160 may determine that the data streams 210 in the aggregate indicates the route-altering event 106 for the autonomous vehicle 402 may be in response to determining that more than a threshold number (e.g., more than 5 out of 10) of data streams 210 indicate the route-altering event 106 for the autonomous vehicle 402.

In certain embodiments, the oversight server 160 may communicate the updated routing plan 136 to other autonomous vehicle(s) 402 that are heading toward the detected route-altering event 106.

In certain embodiments, the operations of the oversight server 160 described in FIG. 2 may be performed by the control device 450. For example, the control device 450 may access the data streams 210 from various sources including the data providers 120, external sensors 112, one or more other autonomous vehicles 402, sensors 446, historical data streams 211.

The control device 450 may determine whether the data streams 210 in the aggregate indicate the route-altering event 106, e.g., by implementing the data stream evaluation machine learning module 140, extracting the features 212a-b, and determining the location accuracy 214a-b, severity 216a-b, and priority 218a-b associated with each data stream 210a-b, similar to that described above. The control device 450 may determine and assign weight values 220a-b to the respective data streams 210a-b, similar to that described above. The control device 450 may determine the weighted sum 222 and compare the weighted sum 222 with the threshold percentage 224. If the control device 450 determines that the weighted sum 222 is more than the threshold percentage 224, the control device 450 may determine an updated routing plan 136 for the autonomous vehicle 402 to avoid the route-altering event 106. In certain embodiments, the control device 450 may navigate the autonomous vehicle 402 according to the updated routing plan 136.

In certain embodiments, the control device 450 may inform the oversight server 160 about the detection of the route-altering event 106. The oversight server 160 and/or the remote operator 184 (see FIG. 1) may confirm, override, or update the determination of the control device 450, and communicate back the result to the control device 450. The control device 450 may navigate the autonomous vehicle 402 according to the confirmed and updated routing plan 136. In certain embodiments, the control device 450 may communicate the updated routing plan 136 to other autonomous vehicle(s) that are heading toward the route-altering event 106. In this manner, the system disclosed in the present disclosure achieves a technical advantage of improving the navigation of the autonomous vehicle 402.

### Example method for leveraging external data streams to optimize autonomous vehicle fleet operations

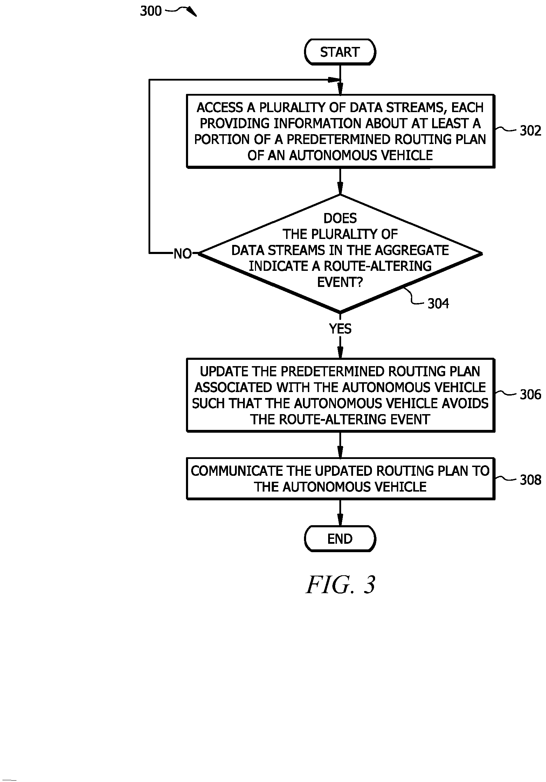

FIG. 3 illustrates an example flowchart of a method 300 for leveraging external data streams to optimize autonomous vehicle fleet operations. Modifications, additions, or omissions may be made to method 300. Method 300 may include more, fewer, or other operations. For example, operations may be performed in parallel or in any suitable order. While at times discussed as the system 100, autonomous vehicle 402, control device 450, oversight server 160, or components of any of thereof performing operations, any suitable system or components of the system may perform one or more operations of the method 300. For example, one or more operations of method 300 may be implemented, at least in part, in the form of software instructions 128, software instructions 170, and processing instructions 480, respectively, from FIGS. 1 and 4, stored on non-transitory, tangible, machine-readable media (e.g., memory 126, 168, and data storage 490, respectively, from FIGS. 1 and 4) that when run by one or more processors (e.g., processors 122, 470, and/or 162, respectively, from FIGS. 1 and 4) may cause the one or more processors to perform operations 302-308.

At operation 302, the oversight server 160 accesses the plurality of data streams 210, each providing information about at least a portion of the predetermined routing plan 136 of the autonomous vehicle 402 ahead of the autonomous vehicle 402. The plurality of data streams 210 may be originated from various data sources including the data providers 120, external sensors 112, internal sensors 446, memory 168, and other autonomous vehicles 402. The oversight server 160 may access the plurality of data streams 210 via API requests and API responses, similar to that described in FIG. 2.

At operation 304, the oversight server 160 determines whether the plurality of data streams 210 in the aggregate indicates a route-altering event 106. For example, the oversight server 160 may feed the data streams 210 to the data stream evaluation machine learning module 140 to extract features 212 from each data stream 210, similar to that described in FIG. 1. If it is determined that the plurality of data streams 210 in the aggregate indicate the route-altering event 106, the method 300 proceeds to operation 306. Otherwise, the method 300 returns to operation 302 to continue to access additional data streams 210.

At operation 306, the oversight server 160 updates the predetermined routing plan 136 associated with the autonomous vehicle 402 such that the autonomous vehicle 402 avoids the route-altering event 106. For example, the updated routing plan 136 may include pulling over, stopping, reducing speed, and taking a detour, among others.

At operation 308, the oversight server 160 communicates the updated routing plan 136 to the autonomous vehicle 402. In response, the control device 450 navigates the autonomous vehicle 402 according to the updated routing plan 136. In certain embodiments, one or more operations of the method 300 may be performed by the control device 450.

### Example autonomous vehicle and its operation

FIG. 4 shows a block diagram of an example vehicle ecosystem 400 in which autonomous driving operations can be determined. As shown in FIG. 4, the autonomous vehicle 402 may be a semi-trailer truck. The vehicle ecosystem 400 may include several systems and components that can generate and/or deliver one or more sources of information/data and related services to the in-vehicle control computer 450 that may be located in an autonomous vehicle 402. The in-vehicle control computer 450 can be in data communication with a plurality of vehicle subsystems 440, all of which can be resident in the autonomous vehicle 402. A vehicle subsystem interface 460 may be provided to facilitate data communication between the in-vehicle control computer 450 and the plurality of vehicle subsystems 440. In some embodiments, the vehicle subsystem interface 460 can include a controller area network (CAN) controller to communicate with devices in the vehicle subsystems 440.

The autonomous vehicle 402 may include various vehicle subsystems that support the operation of the autonomous vehicle 402. The vehicle subsystems 440 may include a vehicle drive subsystem 442, a vehicle sensor subsystem 444, a vehicle control subsystem 448, and/or network communication subsystem 492. The components or devices of the vehicle drive subsystem 442, the vehicle sensor subsystem 444, and the vehicle control subsystem 448 shown in FIG. 4 are examples. The autonomous vehicle 402 may be configured as shown or any other configurations.

The vehicle drive subsystem 442 may include components operable to provide powered motion for the autonomous vehicle 402. In an example embodiment, the vehicle drive subsystem 442 may include an engine/motor 442a, wheels/tires 442b, a transmission 442c, an electrical subsystem 442d, and a power source 442e.

The vehicle sensor subsystem 444 may include a number of sensors 446 configured to sense information about an environment or condition of the autonomous vehicle 402. The vehicle sensor subsystem 444 may include one or more cameras 446a or image capture devices, a radar unit 446b, one or more thermal sensors 446c, a wireless communication unit 446d (e.g., a cellular communication transceiver), an inertial measurement unit (IMU) 446e, a laser range finder/LiDAR unit 446f, a Global Positioning System (GPS) transceiver 446g, a wiper control system 446h. The vehicle sensor subsystem 444 may also include sensors configured to monitor internal systems of the autonomous vehicle 402 (e.g., an O2 monitor, a fuel gauge, an engine oil temperature, etc.).

The IMU 446e may include any combination of sensors (e.g., accelerometers and gyroscopes) configured to sense position and orientation changes of the autonomous vehicle 402 based on inertial acceleration. The GPS transceiver 446g may be any sensor configured to estimate a geographic location of the autonomous vehicle 402. For this purpose, the GPS transceiver 446g may include a receiver/transmitter operable to provide information regarding the position of the autonomous vehicle 402 with respect to the Earth. The radar unit 446b may represent a system that utilizes radio signals to sense objects within the local environment of the autonomous vehicle 402. In some embodiments, in addition to sensing the objects, the radar unit 446b may additionally be configured to sense the speed and the heading of the objects proximate to the autonomous vehicle 402. The laser range finder or LiDAR unit 446f may be any sensor configured to use lasers to sense objects in the environment in which the autonomous vehicle 402 is located. The cameras 446a may include one or more devices configured to capture a plurality of images of the environment of the autonomous vehicle 402. The cameras 446a may be still image cameras or motion video cameras.

Cameras 446a may be rear-facing and front-facing so that pedestrians, and any hand signals made by them or signs held by pedestrians, may be observed from all around the autonomous vehicle. These cameras 446a may include video cameras, cameras with filters for specific wavelengths, as well as any other cameras suitable to detect hand signals, hand-held traffic signs, or both hand signals and hand-held traffic signs. A sound detection array, such as a microphone or array of microphones, may be included in the vehicle sensor subsystem 444. The microphones of the sound detection array may be configured to receive audio indications of the presence of, or instructions from, authorities, including sirens and commands such as "Pull over." These microphones are mounted, or located, on the external portion of the vehicle, specifically on the outside of the tractor portion of an autonomous vehicle. Microphones used may be any suitable type, mounted such that they are effective both when the autonomous vehicle is at rest, as well as when it is moving at normal driving speeds.

The vehicle control subsystem 448 may be configured to control the operation of the autonomous vehicle 402 and its components. Accordingly, the vehicle control subsystem 448 may include various elements such as a throttle and gear selector 448a, a brake unit 448b, a navigation unit 448c, a steering system 448d, and/or an autonomous control unit 448e. The throttle and gear selector 448a may be configured to control, for instance, the operating speed of the engine and, in turn, control the speed of the autonomous vehicle 402. The throttle and gear selector 448a may be configured to control the gear selection of the transmission. The brake unit 448b can include any combination of mechanisms configured to decelerate the autonomous vehicle 402. The brake unit 448b can slow the autonomous vehicle 402 in a standard manner, including by using friction to slow the wheels or engine braking. The brake unit 448b may include an anti-lock brake system (ABS) that can prevent the brakes from locking up when the brakes are applied. The navigation unit 448c may be any system configured to determine a driving path or route for the autonomous vehicle 402. The navigation unit 448c may additionally be configured to update the driving path dynamically while the autonomous vehicle 402 is in operation. In some embodiments, the navigation unit 448c may be configured to incorporate data from the GPS transceiver 446g and one or more predetermined maps so as to determine the driving path for the autonomous vehicle 402. The steering system 448d may represent any combination of mechanisms that may be operable to adjust the heading of autonomous vehicle 402 in an autonomous mode or in a driver-controlled mode.

The autonomous control unit 448e may represent a control system configured to identify, evaluate, and avoid or otherwise negotiate potential obstacles or obstructions in the environment of the autonomous vehicle 402. In general, the autonomous control unit 448e may be configured to control the autonomous vehicle 402 for operation without a driver or to provide driver assistance in controlling the autonomous vehicle 402. In some embodiments, the autonomous control unit 448e may be configured to incorporate data from the GPS transceiver 446g, the radar unit 446b, the LiDAR unit 446f, the cameras 446a, and/or other vehicle subsystems to determine the driving path or trajectory for the autonomous vehicle 402.

The network communication subsystem 492 may comprise network interfaces, such as routers, switches, modems, and/or the like. The network communication subsystem 492 may be configured to establish communication between the autonomous vehicle 402 and other systems, servers, etc. The network communication subsystem 492 may be further configured to send and receive data from and to other systems.

Many or all of the functions of the autonomous vehicle 402 can be controlled by the in-vehicle control computer 450. The in-vehicle control computer 450 may include at least one data processor 470 (which can include at least one microprocessor) that executes processing instructions 480 stored in a non-transitory computer-readable medium, such as the data storage device 490 or memory. The in-vehicle control computer 450 may also represent a plurality of computing devices that may serve to control individual components or subsystems of the autonomous vehicle 402 in a distributed fashion. In some embodiments, the data storage device 490 may contain processing instructions 480 (e.g., program logic) executable by the data processor 470 to perform various methods and/or functions of the autonomous vehicle 402, including those described with respect to FIGS. 1-6.

The data storage device 490 may contain additional instructions as well, including instructions to transmit data to, receive data from, interact with, or control one or more of the vehicle drive subsystem 442, the vehicle sensor subsystem 444, and the vehicle control subsystem 448. The in-vehicle control computer 450 can be configured to include a data processor 470 and a data storage device 490. The in-vehicle control computer 450 may control the function of the autonomous vehicle 402 based on inputs received from various vehicle subsystems (e.g., the vehicle drive subsystem 442, the vehicle sensor subsystem 444, and the vehicle control subsystem 448).

FIG. 5 shows an exemplary system 500 for providing precise autonomous driving operations. The system 500 may include several modules that can operate in the in-vehicle control computer 450, as described in FIG. 4. The in-vehicle control computer 450 may include a sensor fusion module 502 shown in the top left corner of FIG. 5, where the sensor fusion module 502 may perform at least four image or signal processing operations. The sensor fusion module 502 can obtain images from cameras located on an autonomous vehicle to perform image segmentation 504 to detect the presence of moving objects (e.g., other vehicles, pedestrians, etc.,) and/or static obstacles (e.g., stop sign, speed bump, terrain, etc.,) located around the autonomous vehicle. The sensor fusion module 502 can obtain LiDAR point cloud data item from LiDAR sensors located on the autonomous vehicle to perform LiDAR segmentation 506 to detect the presence of objects and/or obstacles located around the autonomous vehicle.

The sensor fusion module 502 can perform instance segmentation 508 on image and/or point cloud data items to identify an outline (e.g., boxes) around the objects and/or obstacles located around the autonomous vehicle. The sensor fusion module 502 can perform temporal fusion 510 where objects and/or obstacles from one image and/or one frame of point cloud data item are correlated with or associated with objects and/or obstacles from one or more images or frames subsequently received in time.

The sensor fusion module 502 can fuse the objects and/or obstacles from the images obtained from the camera and/or point cloud data item obtained from the LiDAR sensors. For example, the sensor fusion module 502 may determine based on a location of two cameras that an image from one of the cameras comprising one half of a vehicle located in front of the autonomous vehicle is the same as the vehicle captured by another camera. The sensor fusion module 502 may send the fused object information to the tracking or prediction module 546 and the fused obstacle information to the occupancy grid module 560. The in-vehicle control computer may include the occupancy grid module 560 which can retrieve landmarks from a map database 558 stored in the in-vehicle control computer. The occupancy grid module 560 can determine drivable areas and/or obstacles from the fused obstacles obtained from the sensor fusion module 502 and the landmarks stored in the map database 558. For example, the occupancy grid module 560 can determine that a drivable area may include a speed bump obstacle.

As shown in FIG. 5 below the sensor fusion module 502, the in-vehicle control computer 450 may include a LiDAR-based object detection module 512 that can perform object detection 516 based on point cloud data item obtained from the LiDAR sensors 514 located on the autonomous vehicle. The object detection 516 technique can provide a location (e.g., in 3D world coordinates) of objects from the point cloud data item. Below the LiDAR-based object detection module 512, the in-vehicle control computer may include an image-based object detection module 518 that can perform object detection 524 based on images obtained from cameras 520 located on the autonomous vehicle. For example, the object detection 518 technique can employ a deep image-based object detection 524 (e.g., a machine learning technique) to provide a location (e.g., in 3D world coordinates) of objects from the image provided by the camera 520.

The radar 556 on the autonomous vehicle can scan an area surrounding the autonomous vehicle or an area towards which the autonomous vehicle is driven. The radar data may be sent to the sensor fusion module 502 that can use the radar data to correlate the objects and/or obstacles detected by the radar 556 with the objects and/or obstacles detected from both the LiDAR point cloud data item and the camera image. The radar data also may be sent to the tracking or prediction module 546 that can perform data processing on the radar data to track objects by object tracking module 548 as further described below.

The in-vehicle control computer may include a tracking or prediction module 546 that receives the locations of the objects from the point cloud and the objects from the image, and the fused objects from the sensor fusion module 502. The tracking or prediction module 546 also receives the radar data with which the tracking or prediction module 546 can track objects by object tracking module 548 from one point cloud data item and one image obtained at one time instance to another (or the next) point cloud data item and another image obtained at another subsequent time instance.

The tracking or prediction module 546 may perform object attribute estimation 550 to estimate one or more attributes of an object detected in an image or point cloud data item. The one or more attributes of the object may include a type of object (e.g., pedestrian, car, or truck, etc.). The tracking or prediction module 546 may perform behavior prediction 552 to estimate or predict the motion pattern of an object detected in an image and/or a point cloud. The behavior prediction 552 can be performed to detect a location of an object in a set of images received at different points in time (e.g., sequential images) or in a set of point cloud data items received at different points in time (e.g., sequential point cloud data items). In some embodiments, the behavior prediction 552 can be performed for each image received from a camera and/or each point cloud data item received from the LiDAR sensor. In some embodiments, the tracking or prediction module 546 can be performed (e.g., run or executed) on received data to reduce computational load by performing behavior prediction 552 on every other or after every pre-determined number of images received from a camera or point cloud data item received from the LiDAR sensor (e.g., after every two images or after every three-point cloud data items).

The behavior prediction 552 feature may determine the speed and direction of the objects that surround the autonomous vehicle from the radar data, where the speed and direction information can be used to predict or determine motion patterns of objects. A motion pattern may comprise a predicted trajectory information of an object over a pre-determined length of time in the future after an image is received from a camera. Based on the motion pattern predicted, the tracking or prediction module 546 may assign motion pattern situational tags to the objects (e.g., "located at coordinates (x,y)," "stopped," "driving at 50mph," "speeding up" or "slowing down"). The situation tags can describe the motion pattern of the object. The tracking or prediction module 546 may send the one or more object attributes (e.g., types of the objects) and motion pattern situational tags to the planning module 562. The tracking or prediction module 546 may perform an environment analysis 554 using any information acquired by system 500 and any number and combination of its components.

The in-vehicle control computer may include the planning module 562 that receives the object attributes and motion pattern situational tags from the tracking or prediction module 546, the drivable area and/or obstacles, and the vehicle location and pose information from the fused localization module 526 (further described below).

The planning module 562 can perform navigation planning 564 to determine a set of trajectories on which the autonomous vehicle can be driven. The set of trajectories can be determined based on the drivable area information, the one or more object attributes of objects, the motion pattern situational tags of the objects, location of the obstacles, and the drivable area information. In some embodiments, the navigation planning 564 may include determining an area next to the road where the autonomous vehicle can be safely parked in a case of emergencies. The planning module 562 may include behavioral decision making 566 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 562 performs trajectory generation 568 and selects a trajectory from the set of trajectories determined by the navigation planning operation 564. The selected trajectory information may be sent by the planning module 562 to the control module 570.

The in-vehicle control computer may include a control module 570 that receives the proposed trajectory from the planning module 562 and the autonomous vehicle location and pose from the fused localization module 526. The control module 570 may include a system identifier 572. The control module 570 can perform a model-based trajectory refinement 574 to refine the proposed trajectory. For example, the control module 570 can apply filtering (e.g., Kalman filter) to make the proposed trajectory data smooth and/or to minimize noise. The control module 570 may perform the robust control 576 by determining, based on the refined proposed trajectory information and current location and/or pose of the autonomous vehicle, an amount of brake pressure to apply, a steering angle, a throttle amount to control the speed of the vehicle, and/or a transmission gear. The control module 570 can send the determined brake pressure, steering angle, throttle amount, and/or transmission gear to one or more devices in the autonomous vehicle to control and facilitate precise driving operations of the autonomous vehicle.

The deep image-based object detection 524 performed by the image-based object detection module 518 can also be used detect landmarks (e.g., stop signs, speed bumps, etc.,) on the road. The in-vehicle control computer may include a fused localization module 526 that obtains landmarks detected from images, the landmarks obtained from a map database 536 stored on the in-vehicle control computer, the landmarks detected from the point cloud data item by the LiDAR-based object detection module 512, the speed and displacement from the odometer sensor 544, or a rotary encoder, and the estimated location of the autonomous vehicle from the GPS/IMU sensor 538 (i.e., GPS sensor 540 and IMU sensor 542) located on or in the autonomous vehicle. Based on this information, the fused localization module 526 can perform a localization operation 528 to determine a location of the autonomous vehicle, which can be sent to the planning module 562 and the control module 570.

The fused localization module 526 can estimate pose 530 of the autonomous vehicle based on the GPS and/or IMU sensors 538. The pose of the autonomous vehicle can be sent to the planning module 562 and the control module 570. The fused localization module 526 can also estimate status (e.g., location, possible angle of movement) of the trailer unit based on (e.g., trailer status estimation 534), for example, the information provided by the IMU sensor 542 (e.g., angular rate and/or linear velocity). The fused localization module 526 may also check the map content 532.

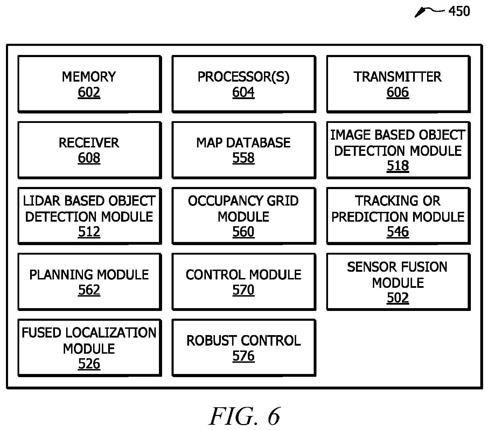

FIG. 6 shows an exemplary block diagram of an in-vehicle control computer 450 included in an autonomous vehicle 402. The in-vehicle control computer 450 may include at least one processor 604 and a memory 602 having instructions stored thereupon (e.g., software instructions 128 and processing instructions 480 in FIGS. 1 and 4, respectively). The instructions, upon execution by the processor 604, configure the in-vehicle control computer 450 and/or the various modules of the in-vehicle control computer 450 to perform the operations described in FIGS. 1-6. The transmitter 606 may transmit or send information or data to one or more devices in the autonomous vehicle. For example, the transmitter 606 can send an instruction to one or more motors of the steering wheel to steer the autonomous vehicle. The receiver 608 receives information or data transmitted or sent by one or more devices. For example, the receiver 608 receives a status of the current speed from the odometer sensor or the current transmission gear from the transmission. The transmitter 606 and receiver 608 also may be configured to communicate with the plurality of vehicle subsystems 440 and the in-vehicle control computer 450 described above in FIGS. 5 and 6.

While several embodiments have been provided in this disclosure, it should be understood that the disclosed systems and methods might be embodied in many other specific forms without departing from the scope of this disclosure. The present examples are to be considered as illustrative and not restrictive, and the intention is not to be limited to the details given herein. For example, the various elements or components may be combined or integrated into another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

Implementations of the disclosure can be described in view of the following clauses, the features of which can be combined in any reasonable manner.

Clause 1. A system comprising:
a memory configured to store a predetermined routing plan associated with an autonomous vehicle;
a processor, operably coupled to the memory, and configured to:
   access a plurality of data streams, each data stream from among the plurality of data streams providing information about an environment associated with at least a portion of a road in the predetermined routing plan ahead of the autonomous vehicle;
   determine that the plurality of data streams in the aggregate indicate a route-altering event for the autonomous vehicle, wherein determining that the plurality of data streams in the aggregate indicate the route-altering event for the autonomous vehicle comprises:
      extracting a first set of features from a first data stream from among the plurality of data streams;
      determining, based at least in part upon the first set of features, that the first data stream provides information about a first geographical location area that is local with respect to a current location of the autonomous vehicle;
      determining, based at least in part upon the first set of features, that the first data stream indicates the route-altering event for the autonomous vehicle;
      extracting a second set of features from a second data stream from among the plurality of data streams;
      determining, based at least in part upon the second set of features, that the second data stream provides information about a second geographical location area that is not local with respect to the current location of the autonomous vehicle;
      determining, based at least in part upon the second set of features, that an indication of the route-altering event is absent in the second data stream;
      assigning a first weight value to the first data stream;
      assigning a second weight value to the second data stream, wherein the first weight value is more than the second weight value in response to determining that the first data stream is local with respect to the autonomous vehicle and that the second data stream is not local with respect to the autonomous vehicle;
      determining a weighted sum of the first data stream and the second data stream using the first weight value and the second weight value;
      determining that the weighted sum of the first data stream and the second data stream is more than a threshold percentage;
   in response to determining that the plurality of data streams in the aggregate indicate the route-altering event for the autonomous vehicle, update the predetermined routing plan such that the autonomous vehicle avoids the route-altering event; and
   communicate the updated routing plan to the autonomous vehicle.

Clause 2. The system of claim 1, wherein a first subset of the plurality of data streams originates from a plurality of external data providers with respect to the autonomous vehicle.

Clause 3. The system of claim 2, wherein the plurality of external data providers comprises at least one weather data provider, at least one traffic data provider, and at least one road condition data provider.

Clause 4. The system of claim 1, wherein a second subset of the plurality of data streams originates from one or more external sensors with respect to the autonomous vehicle.

Clause 5. The system of claim 4, wherein each external sensor from among the one or more external sensors is located at a particular location on or around the road travelled by the autonomous vehicle.

Clause 6. The system of claim 4, wherein the one or more external sensors comprise a sensor coupled to a traffic light, a light detection and ranging (LiDAR) sensor, a sensor associated with a device indicating a location of a construction zone, a temperature sensor, a humidity sensor, or a frost detection sensor.

Clause 7. The system of claim 1, wherein the processor is associated with an oversight server communicatively coupled to the autonomous vehicle.

Clause 8. The system of claim 1, wherein in response to communicating the updated routing plan to the autonomous vehicle, the autonomous vehicle is navigated according to the updated routing plan.

Clause 9. A method comprising:
accessing a plurality of data streams, each data stream from among the plurality of data streams providing information about an environment associated with at least a portion of a road in a predetermined routing plan ahead of an autonomous vehicle;
determining that the plurality of data streams in the aggregate indicate a route-altering event for the autonomous vehicle, wherein determining that the plurality of data streams in the aggregate indicate the route-altering event for the autonomous vehicle comprises:
   extracting a first set of features from a first data stream from among the plurality of data streams;
   determining, based at least in part upon the first set of features, that the first data stream provides information about a first geographical location area that is local with respect to a current location of the autonomous vehicle;
   determining, based at least in part upon the first set of features, that the first data stream indicates the route-altering event for the autonomous vehicle;
   extracting a second set of features from a second data stream from among the plurality of data streams;
   determining, based at least in part upon the second set of features, that the second data stream provides information about a second geographical location area that is not local with respect to the current location of the autonomous vehicle;
   determining, based at least in part upon the second set of features, that an indication of the route-altering event is absent in the second data stream;
   assigning a first weight value to the first data stream;
   assigning a second weight value to the second data stream, wherein the first weight value is more than the second weight value in response to determining that the first data stream is local with respect to the autonomous vehicle and that the second data stream is not local with respect to the autonomous vehicle;
   determining a weighted sum of the first data stream and the second data stream using the first weight value and the second weight value;
   determining that the weighted sum of the first data stream and the second data stream is more than a threshold percentage;
in response to determining that the plurality of data streams in the aggregate indicate the route-altering event for the autonomous vehicle, updating the predetermined routing plan such that the autonomous vehicle avoids the route-altering event; and
communicating the updated routing plan to the autonomous vehicle.

Clause 10. The method of claim 9, wherein a first subset of the plurality of data streams originates from at least one sensor associated with the autonomous vehicle.

Clause 11. The method of claim 10, wherein:
in response to determining, based at least in part upon the first set of features, that the first data stream provides information about the first geographical location area that is local with respect to a current location of the autonomous vehicle, it is determined that the first data stream provides reliable information with respect to the current location of the autonomous vehicle; and
in response to determining, based at least in part upon the second set of features, that the second data stream provides information about the second geographical location area that is not local with respect to the current location of the autonomous vehicle, it is determined that the second data stream provides unreliable information with respect to the current location of the autonomous vehicle.

Clause 12. The method of claim 9, wherein a second subset of the plurality of data streams is originated from one or more other autonomous vehicles.

Clause 13. The method of claim 9, wherein the route-altering event comprises at least one of the following:
an extreme weather condition;
a congested traffic condition;
a poor or undrivable road condition; or
an event that prevents or impedes an autonomous driving of the autonomous vehicle.

Clause 14. The method of claim 9, wherein the updated routing plan comprises at least one of the following:
instructing the autonomous vehicle to re-route;
instructing the autonomous vehicle to stop;
instructing the autonomous vehicle to pull over to a side of the road;
instructing the autonomous vehicle to delay a departure from a launch pad if the autonomous vehicle has not yet left the launch pad; or
instructing the autonomous vehicle to return to the launch pad if the autonomous vehicle has left the launch pad and is within a threshold distance from the launch pad.

Clause 15. A computer-readable medium storing instructions that when executed by a processor cause the processor to:
access a plurality of data streams, each data stream from among the plurality of data streams providing information about an environment associated with at least a portion of a road in a predetermined routing plan ahead of an autonomous vehicle;
determine that the plurality of data streams in the aggregate indicate a route-altering event for the autonomous vehicle, wherein determining that the plurality of data streams in the aggregate indicate the route-altering event for the autonomous vehicle comprises:
   extracting a first set of features from a first data stream from among the plurality of data streams;
   determining, based at least in part upon the first set of features, that the first data stream provides information about a first geographical location area that is local with respect to a current location of the autonomous vehicle;
   determining, based at least in part upon the first set of features, that the first data stream indicates the route-altering event for the autonomous vehicle;
   extracting a second set of features from a second data stream from among the plurality of data streams;
   determining, based at least in part upon the second set of features, that the second data stream provides information about a second geographical location area that is not local with respect to the current location of the autonomous vehicle;
   determining, based at least in part upon the second set of features, that an indication of the route-altering event is absent in the second data stream;
   assigning a first weight value to the first data stream;
   assigning a second weight value to the second data stream, wherein the first weight value is more than the second weight value in response to determining that the first data stream is local with respect to the autonomous vehicle and that the second data stream is not local with respect to the autonomous vehicle;
   determining a weighted sum of the first data stream and the second data stream using the first weight value and the second weight value;
   determining that the weighted sum of the first data stream and the second data stream is more than a threshold percentage;
in response to determining that the plurality of data streams in the aggregate indicate the route-altering event for the autonomous vehicle, update the predetermined routing plan such that the autonomous vehicle avoids the route-altering event; and
communicate the updated routing plan to the autonomous vehicle.

Clause 16. The computer-readable medium of claim 15, wherein determining that the plurality of data streams in the aggregate indicates the route-altering event for the autonomous vehicle is in response to determining that more than a threshold number of the plurality of data streams indicate the route-altering event for the autonomous vehicle.

Clause 17. The computer-readable medium of claim 15, wherein:
the processor is further configured to access historical data streams that provide historical information about the at least the portion of the predetermined routing plan ahead of the autonomous vehicle; and
the plurality of data streams comprises the historical data streams.

Clause 18. The computer-readable medium of claim 15, wherein the processor is associated with a control device on-board the autonomous vehicle.

Clause 19. The computer-readable medium of claim 15, wherein the updated routing plan is determined such that the update routing plan leads to satisfying one or more trip requirements comprising a desired arrival time, optimizing a desired fuel saving parameter, optimizing a vehicle health, or optimizing a cargo health.

Clause 20. The computer-readable medium of claim 15, wherein the updated routing plan comprises at least one of the following:
instructing the autonomous vehicle to delay a departure from a launch pad if the autonomous vehicle has not yet left the launch pad; or
instructing the autonomous vehicle to return to the launch pad if the autonomous vehicle has left the launch pad and is within a threshold distance from the launch pad.

## Claims

1. A system comprising:
a memory configured to store a predetermined routing plan associated with an autonomous vehicle;
a processor, operably coupled to the memory, and configured to:
access a plurality of data streams, each data stream from among the plurality of data streams providing information about an environment associated with at least a portion of a road in the predetermined routing plan ahead of the autonomous vehicle;
determine that the plurality of data streams in the aggregate indicate a route-altering event for the autonomous vehicle, wherein determining that the plurality of data streams in the aggregate indicate the route-altering event for the autonomous vehicle comprises:
extracting a first set of features from a first data stream from among the plurality of data streams;
determining, based at least in part upon the first set of features, that the first data stream provides information about a first geographical location area that is local with respect to a current location of the autonomous vehicle;
determining, based at least in part upon the first set of features, that the first data stream indicates the route-altering event for the autonomous vehicle;
extracting a second set of features from a second data stream from among the plurality of data streams;
determining, based at least in part upon the second set of features, that the second data stream provides information about a second geographical location area that is not local with respect to the current location of the autonomous vehicle;
determining, based at least in part upon the second set of features, that an indication of the route-altering event is absent in the second data stream;
assigning a first weight value to the first data stream;
assigning a second weight value to the second data stream, wherein the first weight value is more than the second weight value in response to determining that the first data stream is local with respect to the autonomous vehicle and that the second data stream is not local with respect to the autonomous vehicle;
determining a weighted sum of the first data stream and the second data stream using the first weight value and the second weight value;
determining that the weighted sum of the first data stream and the second data stream is more than a threshold percentage;
in response to determining that the plurality of data streams in the aggregate indicate the route-altering event for the autonomous vehicle, update the predetermined routing plan such that the autonomous vehicle avoids the route-altering event; and
communicate the updated routing plan to the autonomous vehicle.

2. The system of claim 1, wherein a first subset of the plurality of data streams originates from a plurality of external data providers with respect to the autonomous vehicle, optionally wherein the plurality of external data providers comprises at least one weather data provider, at least one traffic data provider, and at least one road condition data provider.

3. The system of claim 1, wherein a second subset of the plurality of data streams originates from one or more external sensors with respect to the autonomous vehicle, optionally wherein each external sensor from among the one or more external sensors is located at a particular location on or around the road travelled by the autonomous vehicle.

4. The system of claim 3, wherein the one or more external sensors comprise a sensor coupled to a traffic light, a light detection and ranging (LiDAR) sensor, a sensor associated with a device indicating a location of a construction zone, a temperature sensor, a humidity sensor, or a frost detection sensor.

5. The system of claim 1, wherein in response to communicating the updated routing plan to the autonomous vehicle, the autonomous vehicle is navigated according to the updated routing plan.

6. A method comprising:
accessing a plurality of data streams, each data stream from among the plurality of data streams providing information about an environment associated with at least a portion of a road in a predetermined routing plan ahead of an autonomous vehicle;
determining that the plurality of data streams in the aggregate indicate a route-altering event for the autonomous vehicle, wherein determining that the plurality of data streams in the aggregate indicate the route-altering event for the autonomous vehicle comprises:
extracting a first set of features from a first data stream from among the plurality of data streams;
determining, based at least in part upon the first set of features, that the first data stream provides information about a first geographical location area that is local with respect to a current location of the autonomous vehicle;
determining, based at least in part upon the first set of features, that the first data stream indicates the route-altering event for the autonomous vehicle;
extracting a second set of features from a second data stream from among the plurality of data streams;
determining, based at least in part upon the second set of features, that the second data stream provides information about a second geographical location area that is not local with respect to the current location of the autonomous vehicle;
determining, based at least in part upon the second set of features, that an indication of the route-altering event is absent in the second data stream;
assigning a first weight value to the first data stream;
assigning a second weight value to the second data stream, wherein the first weight value is more than the second weight value in response to determining that the first data stream is local with respect to the autonomous vehicle and that the second data stream is not local with respect to the autonomous vehicle;
determining a weighted sum of the first data stream and the second data stream using the first weight value and the second weight value;
determining that the weighted sum of the first data stream and the second data stream is more than a threshold percentage;
in response to determining that the plurality of data streams in the aggregate indicate the route-altering event for the autonomous vehicle, updating the predetermined routing plan such that the autonomous vehicle avoids the route-altering event; and
communicating the updated routing plan to the autonomous vehicle.

7. The method of claim 6, wherein a first subset of the plurality of data streams originates from at least one sensor associated with the autonomous vehicle.

8. The method of claim 7, wherein:
in response to determining, based at least in part upon the first set of features, that the first data stream provides information about the first geographical location area that is local with respect to a current location of the autonomous vehicle, it is determined that the first data stream provides reliable information with respect to the current location of the autonomous vehicle; and
in response to determining, based at least in part upon the second set of features, that the second data stream provides information about the second geographical location area that is not local with respect to the current location of the autonomous vehicle, it is determined that the second data stream provides unreliable information with respect to the current location of the autonomous vehicle .

9. The method of any of claims 6 to 8, wherein a second subset of the plurality of data streams is originated from one or more other autonomous vehicles.

10. The method of any of claims 6 to 9, wherein the route-altering event comprises at least one of the following:
an extreme weather condition;
a congested traffic condition;
a poor or undrivable road condition; or
an event that prevents or impedes an autonomous driving of the autonomous vehicle.

11. The method of any of claims 6 to 10, wherein the updated routing plan comprises at least one of the following:
instructing the autonomous vehicle to re-route;
instructing the autonomous vehicle to stop;
instructing the autonomous vehicle to pull over to a side of the road;
instructing the autonomous vehicle to delay a departure from a launch pad if the autonomous vehicle has not yet left the launch pad; or
instructing the autonomous vehicle to return to the launch pad if the autonomous vehicle has left the launch pad and is within a threshold distance from the launch pad.

12. The method of any of claims 6 to 11, wherein determining that the plurality of data streams in the aggregate indicates the route-altering event for the autonomous vehicle is in response to determining that more than a threshold number of the plurality of data streams indicate the route-altering event for the autonomous vehicle.

13. The method of any of claims 6 to 12, further comprising:
accessing historical data streams that provide historical information about the at least the portion of the predetermined routing plan ahead of the autonomous vehicle; and
wherein the plurality of data streams comprises the historical data streams.

14. The method of claims 6 to 13, wherein the updated routing plan is determined such that the update routing plan leads to satisfying one or more trip requirements comprising a desired arrival time, optimizing a desired fuel saving parameter, optimizing a vehicle health, or optimizing a cargo health.

15. A computer-readable medium storing instructions that when executed by a processor cause the processor to perform the method of any of claims 6 to 14.
